# EUROPEAN PATENT SPECIFICATION

(11) **EP 1 952 300 B1**
(45) Date of publication and mention of the grant of the patent: **06.07.2011**
(21) Application number: 06819427.3
(22) Date of filing: 13.11.2006
(51) Int. Cl.: G06F 21/20

(54) **METHOD, SYSTEM AND COMPUTER PROGRAM PRODUCT FOR ACCESS CONTROL**
VERFAHREN, SYSTEM UND COMPUTERPROGRAMMPRODUKT ZUR ZUGANGSKONTROLLE
PROCEDE, SYSTEME ET PRODUIT-PROGRAMME INFORMATIQUE DE COMMANDE D'ACCES

(30) Priority: 25.11.2005 GB 0523995
(43) Date of publication of application: 06.08.2008
(73) Proprietor: International Business Machines Corporation, Armonk, NY 10504 (US)
(72) Inventor: CARTER, Marc Stanley, Bournemouth Dorset BH1 3QT (GB); LEWIS, Ian David, Southampton Hampshire SO18 4HU (GB)
(74) Representative: Roberts, Scott Anthony
(86) International application number: PCT/EP2006/068388
(87) International publication number: WO 2007/060102

(56) References cited:
- WO-A-00/41103
- US-A- 5 345 549
- US-A- 5 774 525
- US-A1- 2003 204 569

## Description

### Field of the Invention

The present invention relates to access control for a computer system. In particular it relates to providing access control based upon a verification relating to a user of a computer system.

### Background of the Invention

It is often necessary to verify that a user of a computer system is a person, as opposed to an entity mimicking a person such as a software agent. For example, this verification is required to detect and/or prevent abuse of resource such as free services available on the internet including: electronic mail services; forum databases; data lookup facilities; and commercial quotation systems. Such services are prone to abuse since there may be no financial charge associated with the services (and therefore no payment information is required) and access to the services is typically via internet web pages including web forms which are easily navigated by automated agents. Such abuse can take the form of an automated agent consuming vast quantities of resource (in the case of an internet email system), or an automated website offering consolidated commercial quotations from multiple vendors by automatically obtaining quotations from individual vendor quotation systems.

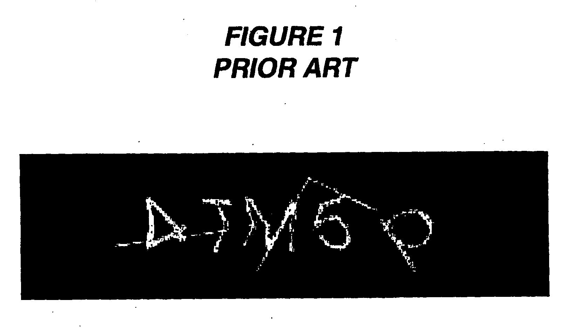

One way to achieve the required verification is to request that a user interpret an obfuscated image of an alphanumerical code. For example, Figure 1 illustrates an alphanumeric code which has been obfuscated in an attempt to verify that a user of a computer system is a person. The user is requested to interpret and input the alphanumeric code (which is "4TM5P" in this example). The patent application WO 00/41103 represents an example of known techniques for image distortion. The drawback of this approach is that the alphanumeric code must always be legible enough for a person to interpret. As long as the code is legible in this sense, it is always going to be possible to provide a software system which is also able to decipher the code. For example, a software application which applies filters to aspects of the obfuscated image to un-obfuscate the code, in addition to character recognition technology (which is well known in the art), is conceivably able to interpret the code. Consequently, it has become necessary to increase the degree of obfuscation such that the alphanumeric code becomes increasingly distorted in order to reduce the risk of interpretation by a software agent. However, as the alphanumeric code is increasingly distorted, a risk that a human user is unable to interpret the code increases. A compromise must therefore be reached using this prior art approach between a satisfactory level of distortion of the alphanumeric code to avoid being cracked by a software agent versus a sufficiently low level of distortion to be interpretable by a human user. This balance represents a compromise in the effectiveness of the technique as a means for distinguishing human users from software agents.

It would therefore be advantageous to provide a mechanism for verifying that a user of a computer system is a person, as opposed to an entity mimicking a person, which mechanism is not reliant upon increasing a degree of obfuscation of alphanumerics since these can potentially be interpreted by a software routine or are potentially not interpretable by a human user.

### Summary of the Invention

The present invention is defined in terms of the appended claims.

### Brief Description of the Drawings

A preferred embodiment of the present invention will now be described, by way of example only, with reference to the accompanying drawings, in which:
Figure 1 illustrates an alphanumeric code which has been obfuscated in the prior art;
Figure 2 is a block diagram of a computer system suitable for the operation of embodiments of the present invention;
Figure 3 is a block diagram of an access control system in accordance with a preferred embodiment of the present invention;
Figure 4a is an exemplary block diagram of elements of the access control system of Figure 3 in use in accordance with a preferred embodiment of the present invention;
Figure 4b is a further exemplary block diagram of elements of the access control system of Figure 3 in use in accordance with a preferred embodiment of the present invention;
Figure 5 is a further exemplary block diagram of elements of the access control system of Figure 3 in use in accordance with a preferred embodiment of the present invention;
Figure 6 is a block diagram of the access control response checker elements of the access control system of Figure 3 in accordance with an alternative embodiment of the present invention;
Figure 7a illustrates an exemplary image element arrangement in accordance with a preferred embodiment of the present invention;
Figure 7b illustrates a further exemplary image element arrangement in accordance with a preferred embodiment of the present invention;
Figure 7c illustrates a further exemplary image element arrangement in accordance with a preferred embodiment of the present invention;
Figure 7d illustrates a further exemplary image element arrangement in accordance with a preferred embodiment of the present invention;
Figure 8 is an exemplary block diagram of elements of the access control system of Figure 3 and the exemplary image element arrangement of Figure 7d in use in accordance with a preferred embodiment of the present invention; and
Figure 9 is a flowchart of a method in accordance with a preferred embodiment of the present invention.

### Detailed Description of the Preferred Embodiment

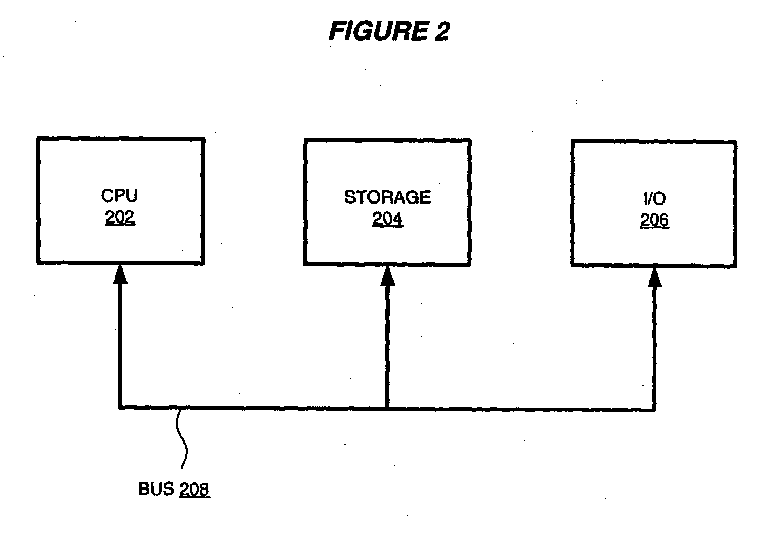

Figure 2 is a block diagram of a computer system suitable for the operation of embodiments of the present invention. A central processor unit (CPU) 202 is communicatively connected to a storage 204 and an input/output (I/O) interface 206 via a data bus 208. The storage 204 can be any read/write storage device such as a random access memory (RAM) or a non-volatile storage device. An example of a non-volatile storage device includes a disk or tape storage device. The I/O interface 206 is an interface to devices for the input or output of data, or for both input and output of data. Examples of I/O devices connectable to I/O interface 206 include a keyboard, a mouse, a display (such as a monitor) and a network connection.

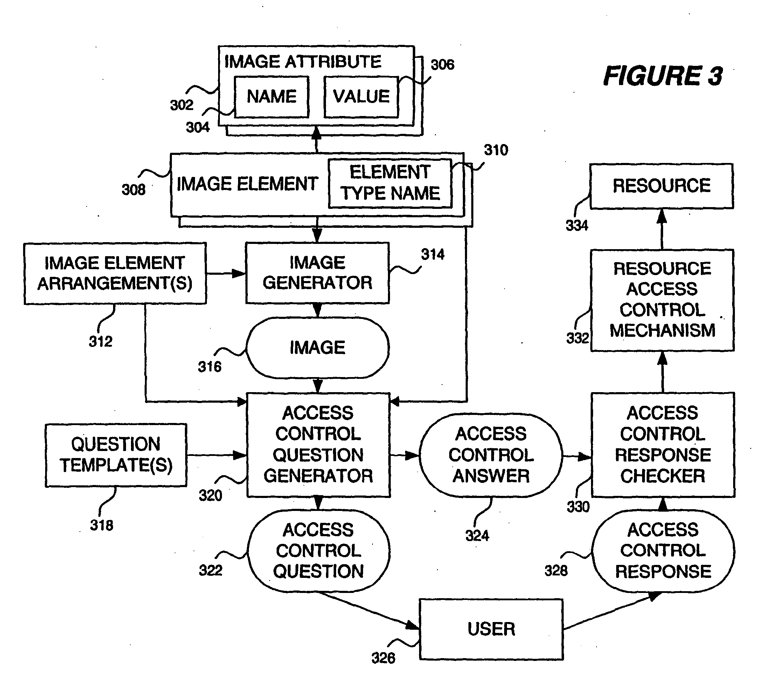

Figure 3 is a block diagram of an access control system in accordance with a preferred embodiment of the present invention. An image generator 314 is a software or hardware component for generating a single image 316 from two or more image elements 308 in accordance with an image element arrangement 312. Image elements 308 are images in their own right which, once processed by the image generator 314, will constitute components within the single image 316. The image elements 308 each have associated an element type name 310. The element type name 310 is preferably a descriptive name for a type of image element. For example, an image element 308 having an image of an animal may have an element type name 310 of "animal". Similarly, an image element 308 having an image of a triangle may have an element type name 310 of "shape" or possibly "polygon". Further associated with each image element 308 are one or more image attributes 302. Image attributes 302 are data items each having an attribute name 304 and an associated attribute value 306. An attribute name 304 is preferably descriptive of a feature of an image associated with an image element 308. For example, an image element 308 having an image of a man may include an image attribute 302 having an attribute name 304 of "eye color". Correspondingly, an attribute value 306 contains a data value which represents a descriptive attribute of an image element 308. So, in the example of an image element 308 for a man having an attribute name 304 of "eye color", the associated attribute value 306 may be "brown" if the image of the man includes brown eyes. In this way, image elements 308 define component images and attributes of the component images which can be combined by the image generator 314 to generate the single image 316.

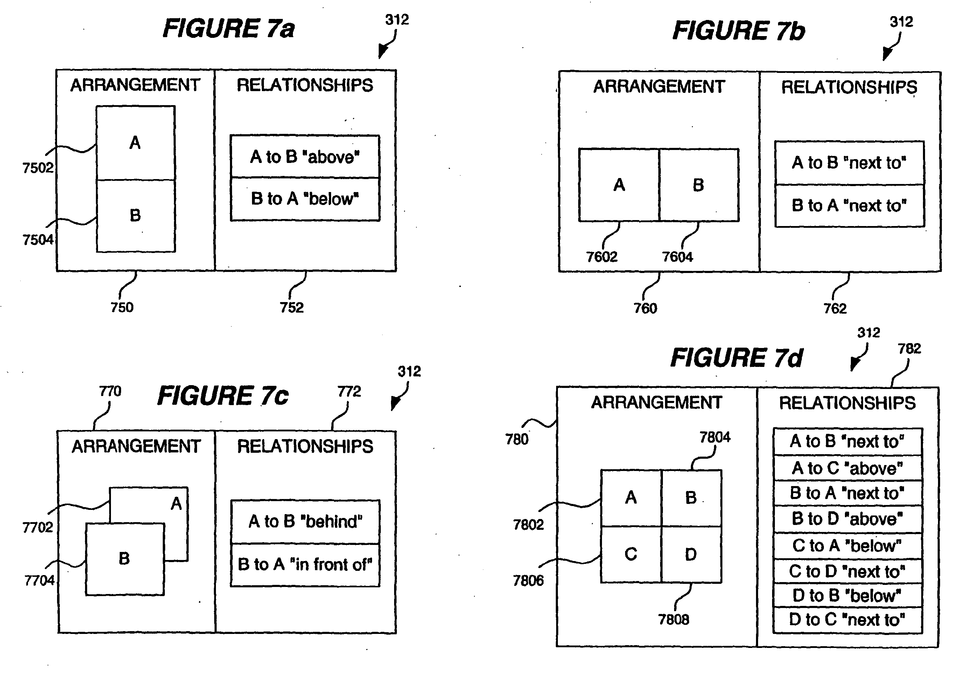

In use, the particular arrangement of each of the image elements 308 in the single image 316 is defined by an image element arrangement 312. The image element arrangement 312 specifies how image elements 308 are to be arranged in order to produce the single image 316. For example, image element arrangement 312 may specify that image elements 308 should be organised adjacent to each other in a single straight line running horizontally across an image. Alternatively, the image element arrangement 312 may specify that image elements 308 should be organised in a grid formation. Particular examples of image element arrangement 312 are considered in detail below with respect to Figures 7a to 7d. It will be appreciated by those skilled in the art that the image element arrangement 312 may not exist as a separate entity and may alternatively form an inherent part of the image generator 314, constituted by the particular method the image generator 314 employs to insert image elements 308 into the single image 316.

Once generated, the image 316 does not include any of the image attributes of its constituent image elements 308 or the element type name 310 for any image element 308. Rather, image 316 is a representation of the arrangement of the image elements 308. Preferably, image 316 is a bitmapped image such as a JPEG (Joint Photographic Experts Group), BMP (bitmap) or GIF (graphic interchange format) image (JPEG is a trademark of the Independent Joint Photographic Experts Group and GIF is a trademark of Compuserve, Inc).

The system of Figure 3 further includes an access control question generator 320 for generating an access control question 322 and an access control answer 324. The access control question 322 (hereinafter referred to as the question 322) is a question relating to the image 316 intended for a user 326 of the access control system who wishes to access a restricted resource 334. To achieve this, the question 322 and the image 316 are made available to the user 326. The access control answer 324 (hereinafter referred to as the answer 324) is the correct answer to the question 320. In combination, the structure and content of the image 316 and the question 322 are such as to require a user 326 to employ human skills of cognitive analysis in order to arrive at the correct answer 324. Such cognitive analysis includes, inter alia, the human traits of perception, intuition and reasoning, and it is the technical problem of detecting the presence of such cognitive analysis that the present systems and methods are suitable for addressing. Addressing this technical problem provides an effective approach to addressing the more general technical problem of verifying that the user 326 of the system is a person, as opposed to an entity mimicking a person. This is because the mimicking of such cognitive analysis by an entity such as a software or hardware entity is extremely difficult to achieve. This is especially so where the question 322 can be highly variable requiring a large suite of human cognitive abilities to provide a correct answer 324 without access to the image element and 308 image attribute 302 information.

The access control question generator 320 (hereinafter referred to as the question generator 320) constructs the question 322 from a question template 318. Question template 318 provides a structure for the question 322 which is augmented by one or more of element type names 310, attribute names 304 and attribute values 306 by the question generator 320. The appropriate element type names 310, attribute names 304 and attribute values 306 are derived from image elements 308 which were used to generate the image 316. Once augmented by the question generator 318, the question template 318 becomes a question 322 suitable for presentation to the user 326 along with the image 316. The answer 324 to the question 322 is always an image attribute value 306 for a selected one of the image elements 308 comprised in the image 316. The selection the image element 308 having the answer can be undertaken by the question generator 320. Thus, the answer 324 is readily determinable by the question generator 320 at the time of generating the question 322. This is because the question generator 320 has access to the element type names 310 and image attributes 302 for all image elements 308 in the image 316. Preferably, the answer 324, being a value 306 of a selected image attribute 302 for a selected image element 308, is determined in advance of the generation of the question 322. Subsequently the question 322 can be formulated using the question template 318 together with the selected image element 308 and other image elements 308 comprised in the image 316. It will be appreciated by those skilled in the art that the question template 318 may not exist as a separate entity and may alternatively form an inherent part of the question generator 320, constituted by a particular method the question generator 320 employs to generate the question 322.

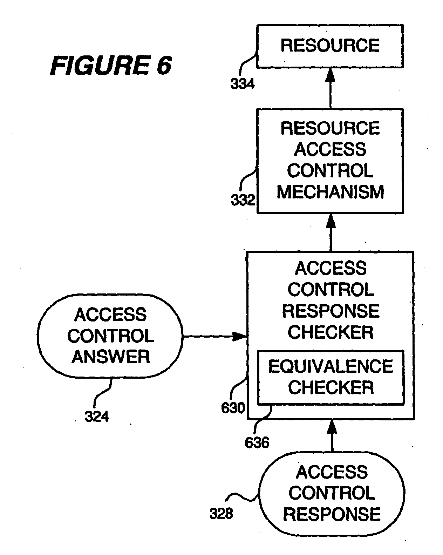

A user provides an access control response 328 in response to the question 322. The access control response 328 is checked by the access control response checker 330 to determine if it matches the answer 324. If the access control response 328 does match the answer 324, then the user is provided with access to the resource 334. By way of example, such access can be facilitated using a resource access control mechanism 332 such as an access control list as part of a secured computer system. Alternatively, if the access control response 328 does not match the answer 324, then the user is prevented from accessing the resource 334. In this way, access to the resource 334 is dependent upon a cognitive analysis of the image 316 to provide a correct response to the access control question 322. This strongly reflects whether the user 326 is a person. In some embodiments an exact match of the access control response 328 and the answer 324 is not required. Instead, equivalence of meaning of the access control response 328 and the answer 324 may be sufficient as is considered in detail below with respect to Figure 6.

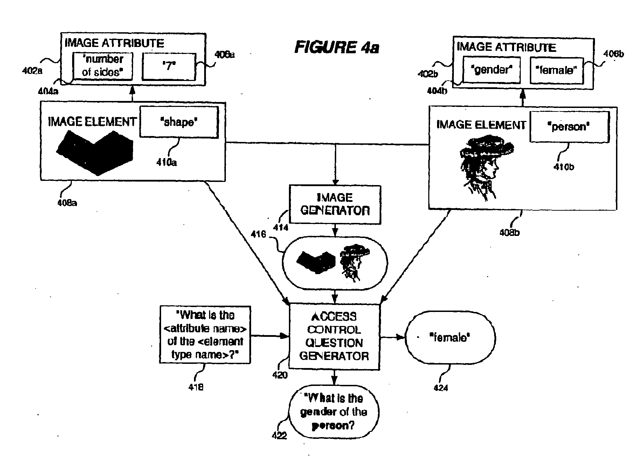

Figure 4a is an exemplary block diagram of elements of the access control system of Figure 3 in use in accordance with a preferred embodiment of the present invention. Many of the elements of Figure 4a are common with those described above with respect to Figure 3 and these will not be repeated here. Figure 4a further includes two particular image elements 408a and 408b. Considering these in turn, image element 408a has an image associated with it of a shaded irregular seven sided polygon. Image element 408a has further associated an element type name 410a of "shape" and a single image attribute 402a. The image attribute 402a has a name 404a of "number of sides" and a value 406a of "7". The second image element 408b has an image associated with it of a head of a lady wearing a hat. Image element 408b has further associated an image type name 410b of "person" and a single image attribute 402b. The image attribute 402b has a name 404b of "gender" and a value 406b of "female".

The image elements 408a and 408b are processed by the image generator using an simple image element arrangement 312 (not shown) of horizontal adjacency (such that the images are placed adjacent to each other). This results in a single image 416 having the image of the polygon on the left and the image of the lady on the right. Subsequently, the question generator 420 selects one of the image elements 408a and 408b to provide the answer 424. Such a selection can be random or alternatively based on a set of rules defined by an administrator of the system. Assuming that the question generator 420 selects image element 408b for the answer, an image attribute value is then selected to constitute the answer 424. Since image element 408b has only one associate image attribute 402b, it is this attribute which is selected. The answer 424 is therefore determined to be the value 406b of the selected image attribute 402b which is "female". If the selected image element 408b has multiple associated image attributes, the question generator 420 can select one as the basis for answer 424 at random or based on a set of rules.

The question generator 420 then formulates an appropriate question 422 using the question template 418. The question template is structured as "What is the <attribute name> of the <element type name>?". Contained within the question template between angled brackets are placeholders for items which are to be derived from the image elements comprised in the image 416. In this case, the appropriate image element to be used to complete fill in the gaps in the question template is that image element 408b selected to provide the answer 424. Thus the attribute name 404b in the question 422 is "gender", and the element type name 410b in the question 422 is "person". This results in a completed question 422 of "What is the gender of the person?". It can be seen that answering this question requires cognitive analysis of the image 416 to determine: which part of the image 416 is a "person"; and the gender of the person.

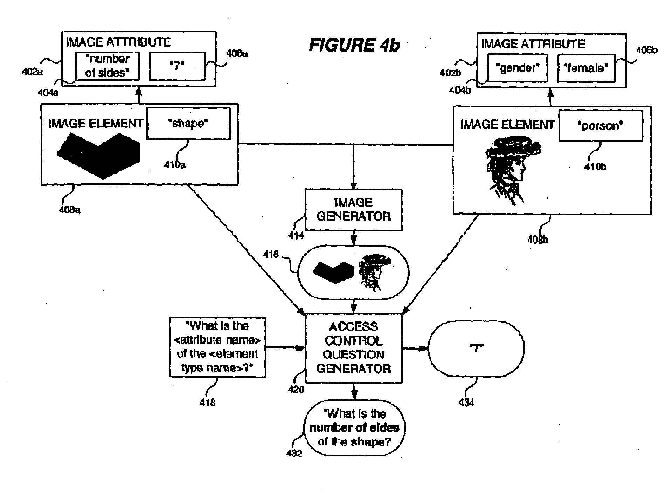

Figure 4b is a further exemplary block diagram of elements of the access control system of Figure 3 in use in accordance with a preferred embodiment of the present invention. Figure 4b is identical to Figure 4a except that in Figure 4b the question generator elects to use image element 408a (the irregular polygon) as the basis for the answer 434. The answer 432 of Figure 4b is therefore the value 406a of the image attribute 402a associated with image element 408a, which is "7". The question 432 formulated for Figure 4b is therefore based on the data associated with image element 408a. Thus the attribute name 404a in the question 432 is "number of sides", and the element type name 410a in the question 432 is "shape". The question 432 generated by the question generator 420 of Figure 4b is "What is the number of sides of the shape?". Once again, it can be seen that answering this question requires cognitive analysis of the image 416 to determine: which part of the image 416 is a "shape" (this is particularly difficult to undertake automatically, especially when the shape is irregular); and how many sides the shape has.

Figures 4a and 4b demonstrate a particular formulation of question based on a question template structured to identify a particular image element by element type name and to identify a particular attribute based on attribute name (the value of the attribute providing the answer). It is clear that once an answer has been chosen by the question generator as being a value of a selected attribute associated with a selected image element, the question must include an identifier of the selected image element and the attribute name of the selected attribute. Whilst the identifier of the selected image element could be provided as the element type name, further complexity can be introduced into the question by requiring that the identity of the selected image element is itself deduced cognitively by the user. This can be achieved in a number of ways. The selected image element could be identified in terms of an additional attribute of the image element which is unique among all image elements in the image. For example, in an image of two people having different colored eyes, the eye color would uniquely identify one of the people. Alternatively, the selected image element could be identified in terms of an attribute of a different, second, image element in conjunction with a specification of a relative location of the selected image element with respect to the second image element. For example, in a grid of faces, a particular face could be identified as being positioned above another of the faces, the other of the faces having a particular eye color. These approaches to differing methods of identifying a selected image element will be considered in detail below by way of example with reference to the system of Figure 3.

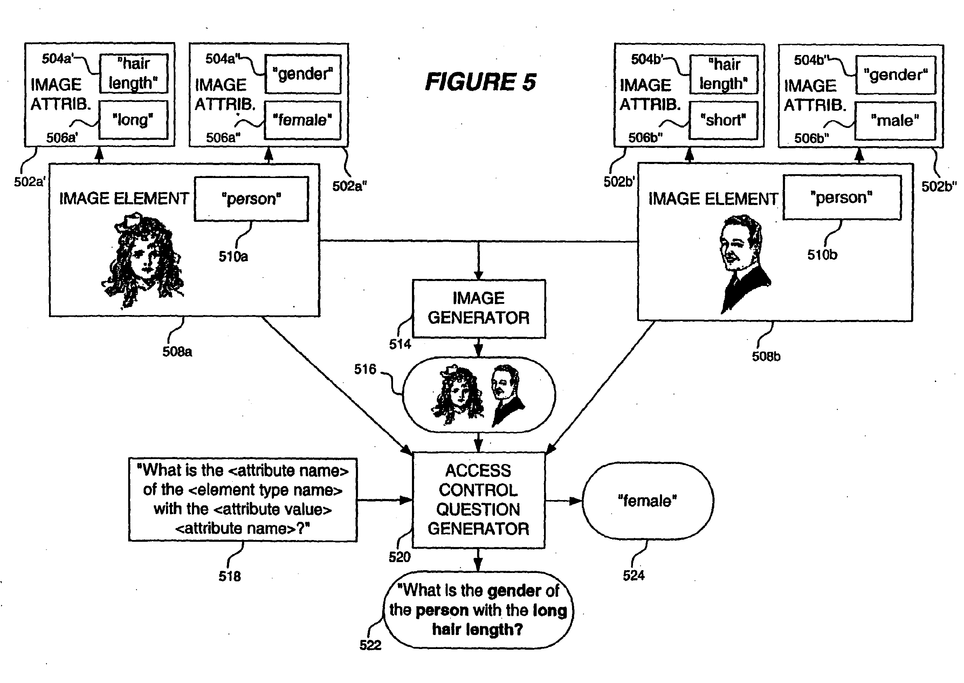

Figure 5 is a further exemplary block diagram of elements of the access control system of Figure 3 in use in accordance with a preferred embodiment of the present invention. Many of the features of Figure 5 are identical to those described above with respect to Figure 3 and these will not be repeated here. Figure 5 includes two image elements 508a and 508b. Considering these in turn, image element 508a has an image associated with it of a female face (it is clear to a human reader that the image is female by virtue of the face of the image and the hair styling). Image element 508a has further associated an element type name 510a of "person" and two image attributes 502a' and 502a". The image attribute 502a' has a name 504a' of "hair length" and a value 506a' of "long". The image attribute 502a" has a name 504a" of "gender" and a value 506a" of "female". The second image element 508b has an image associated with it of a male face (it is clear to a human reader that the image is male by virtue of the face of the image and the hair styling). Image element 508b has further associated an element type name 510b of "person" and two image attributes 502b' and 502b". The image attribute 502b' has a name 504b' of "hair length" and a value 506b' of "short". The image attribute 502b" has a name 504b" of "gender" and a value 506b" of "male".

The image elements 508a and 508b are processed by the image generator using an simple image element arrangement 312 (not shown) of horizontal adjacency. This results in a single image 516 having the image of the female face on the left and the image of the male face on the right. Subsequently, the question generator 520 selects one of the image elements 508a and 508b to provide the answer 524. Assuming, for the purpose of demonstration, that the question generator 520 selects image element 508a for the answer, one of the image attributes 502a' or 502a" is then selected. This can be undertaken randomly or in accordance with a defined rule. Assuming that the question generator 520 selects image attribute 502a", the image attribute value 506a" is then identified as the answer 524. The answer 524 is therefore determined to be the value 506a" of the image attribute 502a" which is "female".

The question generator 520 then formulates an appropriate question 522 using the question template 518. The question template is structured as "What is the <attribute name> of the <element type name> with the <attribute value> <attribute name>?". Contained within the question template between angled brackets are placeholders for items which are to be derived from the image elements comprised in the image 516. In this case, the appropriate image element to be used to complete fill in the gaps in the question template is that image element 508a used to provide the answer 524. Two attributes are referred to in the question template 518. The first attribute name is the attribute name 504a" associated with the attribute value 506a" which was selected to be the answer 524, because it is this particular attribute that is the subject of the question. This relationship between the placeholders in the question template and the particular attributes in the image elements can be explicated by specifically identifying which attribute is to be used for a particular placeholder within the question template 518, such as "an attribute name for the attribute having the answer". The second attribute referenced in the question template 518 is referenced by both its name and value. This attribute is being used to uniquely identify the image element 508a having the answer 524 among all image elements 508a, 508b comprised in the image 516. Thus, an image attribute of the image element 508a must be selected which has a value unique among all image elements in the image 516. Of course, the identifying image attribute cannot be the image attribute containing the answer to the question, or the question will contain its own answer. In the example of Figure 5, only one other image attribute 502a' exists for the image element 508', and so the question template 518 is augmented with the details of that image attribute 502a'.

Thus, in augmenting the question template 518, the question generator 520 finds that the first "<attribute name>" within the template is to be replaced with the attribute name 504a" of the image attribute 502a" having the answer, which is "gender". The "<element type name>" within the template is to be replaced with the element type name 510a of the image element 508a having the answer, which is "person". The "<attribute value>" within the template is to be replaced with the attribute value 506a' of the image attribute 502a' uniquely identifying the image element 508a among all image elements in the image 516, which is "long". Finally, the second "<attribute name>" within the template is to be replaced with the attribute name 504a' of the image attribute 504a' uniquely identifying the image element 508a among all image elements in the image 516, which is "hair length". Thus, the question 522 generated is "What is the gender of the person with the long hair length?". It can be seen that answering this question requires cognitive analysis of the image 416 to determine: which parts of the image are persons; which person has long hair; and what is the gender of the person with long hair.

An access control response 328 to such a question 522 from a user 326 preferably matches with the answer 324. However, since the answer 324 corresponds to a descriptive attribute of the image 316 it is conceivable that the access control response 328 is not identical to the answer 324. For example, an answer 324 relating to a hair color for an image of a person may have a value of "Blonde", whilst an access control response 328 may have a value of "fair", "yellow" or "light". Whilst such access control responses 328 do not correspond exactly to the answer 324, it may be desirable for such responses 328 to be considered equivalent to the answer 324 and to result in the access control mechanism 332 granting access to the resource 334. Figure 6 is a block diagram of the access control response checker elements of the access control system of Figure 3 in accordance with an alternative embodiment of the present invention. The response checker 630 of Figure 6 includes an equivalence checker 636 which is a hardware or software component for determining whether an access control response 328 is equivalent to the answer 324. For example, equivalence can be determined with reference to a database of equivalences (such as a list of equivalent terms for each of a set of individual terms) or a table of synonyms. The response checker 636 determines whether the question 322 is acceptably answered by a user 326 with reference to the equivalence checker 636. In this way, access to the resource 334 can be granted on the basis of identity of answer 324 and response 328, or equivalence of answer 324 and response. Accordingly, the potential for humans to provide differing, but equivalent, descriptive responses to questions relating to the image 316 can be accommodated.

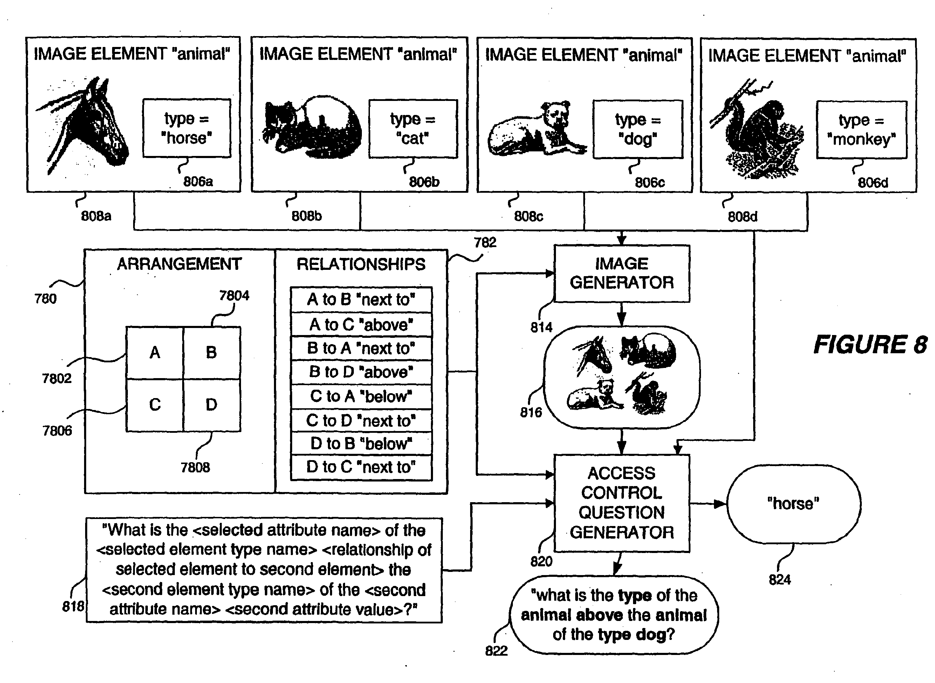

The above examples of a preferred embodiment of the present invention in use relate to a single image element arrangement 312 of hor.izontal adjacency. The access control system can be enhanced by the use of other image element arrangements, some examples of which shall now be described. Figure 7a illustrates an exemplary image element arrangement 312 in accordance with a preferred embodiment of the present invention. The image element arrangement 312 includes an arrangement 750 and a set of one or more relationships 752. The arrangement 750 provides a definition of how two or more image elements 308 are to be combined by the image generator 314 to produce the single image 316. For example, arrangement 740 can be a container data structure including placeholders corresponding to locations 7502 and 7504 for image elements 308 in a single image 316. Alternatively, arrangement 750 can be a specification of locations 7502 and 7504 in a single image 316. In the example of Figure 7a the arrangement specifies that two image elements 308 are to be arranged vertically with a first image element having a location 7502 labelled "A" which is above a second image element having a location 7504 labelled "B". The image element arrangement 312 of Figure 7a further includes a set of relationships 752. Each item in the set of relationships 752 is a description of the relative location of an image element 308 in the arrangement 750. The set of relationships 752 includes an entry for location "A" 7502 relative to location "B" 7504 described as "above". The set of relationships 752 further includes an entry for location "B" 7504 relative to location "A" 7502 described as "below". The descriptive relationships 752 can be used by the question generator 320 to generate a question 322 including an identification of a selected image element 308 in terms of a relative location with respect to a second image element 308. An example of such a question is described below with respect to Figure 8.

Figure 7b illustrates a further exemplary image element arrangement 312 in accordance with a preferred embodiment of the present invention. In the example of Figure 7b an arrangement 760 specifies that two image elements 308 are to be arranged horizontally with a first image element having a location 7602 labelled "A" which is next to a second image element having a location 7604 labelled "B". The image element arrangement 312 of Figure 7b further includes a set of relationships 762 having an entry for location "A" 7602 relative to location "B" 7604 described as "next to". The set of relationships 762 further includes an entry for location "B" 7604 relative to location "A" 7602 also described as "next to".

Figure 7c illustrates a further exemplary image element arrangement 312 in accordance with a preferred embodiment of the present invention. In the example of Figure 7c an arrangement 770 specifies that two image elements 308 are to be arranged one in front of the other, with a first image element having a location 7702 labelled "A" being behind a second image element having a location 7704 labelled "B". The image element arrangement 312 of Figure 7c further includes a set of relationships 772 having an entry for location "A" 7702 relative to location "B" 7704 described as "behind". The set of relationships 772 further includes an entry for location "B" 7704 relative to location "A" 7702 being described as "in front of".

Figure 7d illustrates a further exemplary image element arrangement 312 in accordance with a preferred embodiment of the present invention. In the example of Figure 7d an arrangement 780 specifies that four image elements 308 are to be arranged in a grid formation with: a first image element having a location 7802 labelled "A" which is at the top left of the grid; a second image element having a location 7804 labelled "B" which is at the top right of the grid; a third image element having a location 7806 labelled "C" which is at the bottom left of the grid; and a fourth image element having a location 7808 labelled "D" which is at the bottom right of the grid. The image element arrangement 312 of Figure 7d further includes a set of relationships 782 having an entry for location "A" 7802 relative to location "B" 7804 described as "next to". The set of relationships 782 further includes an entry for location "A" 7802 relative to location "C" 7806 described as "above", and so on for each of the locations 7802, 7804, 7806 and 7808 in the grid.

Figure 8 is an exemplary block diagram of elements of the access control system of Figure 3 and the exemplary element arrangement 312 of Figure 7d in use in accordance with a preferred embodiment of the present invention. Many of the features of Figure 8 are identical to those described above with respect to Figure 3 and these will not be repeated here. Figure 8 includes four image elements 808a to 808d. Considering these in turn, image element 808a has an image associated with it of a horse, an element type name of "animal" and an image attribute 806a having a name "type" and a value of "horse". Image element 808b has an image associated with it of a cat, an element type name of "animal" and an image attribute 806b having a name "type" and a value of "cat". Image element 808c has an image associated with it of a dog, an element type name of "animal" and an image attribute 806c having a name "type" and a value of "dog". Image element 808d has an image associated with it of a monkey, an element type name of "animal" and an image attribute 806d having a name "type" and a value of "monkey".

The image elements 808a to 808d are processed by the image generator 814 using the image element arrangement 312 of Figure 7d. The image element arrangement 312 includes a grid arrangement 780 and a set of relationships 782. The grid arrangement 780 specifies how image elements 808a to 808d are to be arranged into four locations corresponding to top left, top right, bottom left and bottom right of the grid accordingly. Thus, the image generator products a single image 816 having components as follows: an image of a horse is located to the top left; an image of a cat is located to the top right; an image of a dog is located to the bottom left; and an image of a monkey is located to the bottom right. Subsequently, the question generator 820 chooses one of the image elements 808a to 808d to be a selected image element which will provide the answer 824. Assuming, for the purpose of demonstration, that the question generator 820 selects image element 808a as the selected image element, the image attribute 806a is then selected to form the basis of the answer 824. The answer 824 is therefore determined to be the value "horse".

The question generator 820 then formulates an appropriate question 822 using the question template 818. The question template is structured as "What is the <selected attribute name> of the <selected element type name> <relationship of selected element to second element> the <second element type name> of the <second attribute name> <second attribute value>?". This question template 818 requires the identification of a second image element having a location relative to the selected image element 808a in the image 816. The selected image element 808a is located in arrangement location "A" 7802 at the top left of the grid. Thus, it is located next to location "B" 7804 and above location "C" 7806, and image elements located in either of these two locations could be selected as the second image element. Taking, for the purpose of demonstration, the image element at location "C" 7806 as the second image element, this is the image of the dog which is associated with image element 808c. Thus, the second image element is taken to be image element 808c.

The placeholders Contained within the question template between angled brackets are now derived from the image elements comprised in the image 816 to augment the question template 818. The question generator 820 completes this question template as follows. The <selected attribute name> is "type" because this is the attribute name of the attribute 806a of the selected image element 808a. The <selected element type name> is "animal" because this is the element type name of the selected image element 808a. The <relationship of selected element to second element> can be derived from the set of relationships 782 in the image element arrangement 312. The selected image element 808a is arranged to be at location "A" 7802 and the second image element 808c is arranged to be at location "C" 7806. Thus, the appropriate relationship is "A to C" which is described in the set of relationships 782 as "above". The <second element type name> is "animal" because this is the element type name of the second image element 808c. The <second attribute name> is "type" because this is the name of the attribute 806c associated with the second image element 808c. Finally, the <second attribute value> is "dog" because this is the value of the attribute 806c associated with the second image element 808c.

Thus, the question 822 generated is "What is the type of the animal above the animal of the type dog?". It can be seen that answering this question requires substantial cognitive analysis of the image 816 to determine: which parts of the image are animals; which animal is of the type dog; which animal is above the animal of the type dog; and what is the type of the animal above the animal of type dog. In this way the present arrangement is operable to generate an image and a corresponding question which is suitable for verifying that a user of a computer system is a person, as opposed to an entity mimicking a person. The arrangement does not rely on obfuscation of an image and so overcomes the problems inherent in such approaches of losing interpretability by human users or being readily interpretable by software agents. The present approach can be further continually extended by the addition of further features within the access control question 322, such as additional indirections in the identification of a selected image element 308 or increasingly complex image element arrangements. Thus, as the abilities of software agents in the interpretation of such cognitive questions improves, the level of complexity of the access control question 322 and associated image 316 can be increased, whilst always being resolvable by a human user.

In a further enhancement of the approach, the complexity of the question can be further increased by introducing descriptive transformations of the image which require interpretation by a user but which are not literally reflected in the image itself. For example, the question could be supplemented by clauses such as "if the image was upside down", or "if the image was inverted about a horizontal axis", or "substitute all animals whose type begins with the letter 'd' with a cow". Such transformations can be introduced by the question generator and reflected in the selection of the appropriate answer.

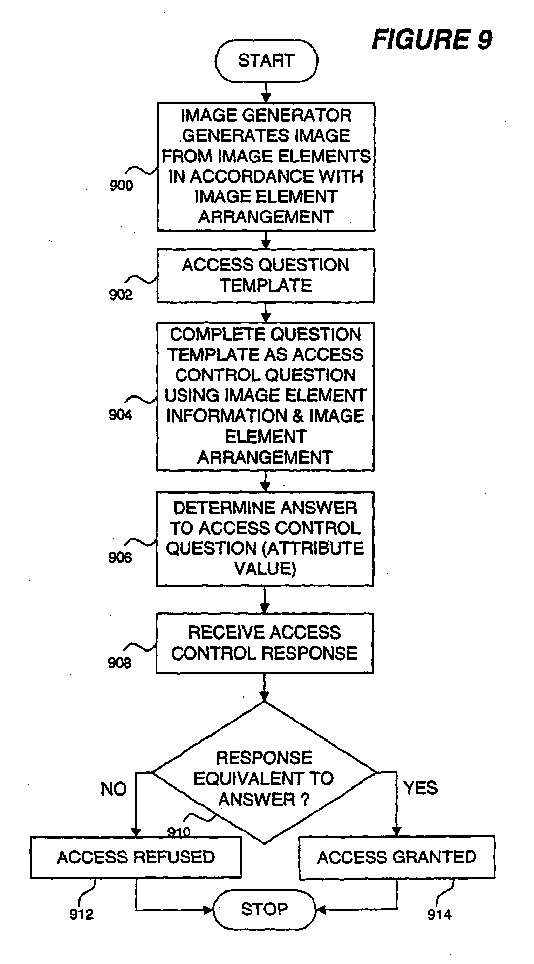

Figure 9 is a flowchart of a method in accordance with a preferred embodiment of the present invention. Initially, at step 900, the image generator 314 generates a single image 316 comprised of two or more image elements 308 in accordance with an image element arrangement 312. Each image element includes an element type name 310 and one or more image attributes 302. Then, at step 902, the question generator 320 accesses a question template 318. Then, at step 904, the question generator 320 completes the question template by insertion of data from image elements 308, image attributes 302 and image element arrangements 312, to generate a complete access control question 322. At step 906 the question generator 320 determines the answer to the access control question as an attribute value 306 of an attribute 302 associated with a selected one of the image elements 308. Alternatively, the step 906 may be undertaken by the question generator 320 in advance of step 904. Subsequently, at step 908 the access control response checker 330 receives an access control response 328, such as from a user 326. At step 910 the access control response checker determines whether the access control response is equivalent to the access control answer 324. Equivalence can be determined to be identity, synonymity or equivalence as determined by a table of equivalences. Subsequently, at step 912, if the access control response 328 is not equivalent to the answer 324 access to the resource 334 is refused. Alternatively, at step 914, if the access control response 328 is equivalent to the answer 324 access to the resource 334 is granted. For example, access can be granted by means of an access control mechanism 332 such as an access control list as part of a secured computer system.

## Claims

1. An access control method in a computer system comprising the steps of:
generating an image having first and second image elements, each of the image elements having associated an element type name and an image attribute, the image attribute including an attribute name and an attribute value;
generating an access control question including an identifier of the first image element and the attribute name of the image attribute associated with the first image element;
receiving an access control response;
in response to a determination that the access control response corresponds to the attribute value of the image attribute associated with the first image element, providing access to a resource in the computer system, wherein the identifier of the first image element comprises:
a) an identifier of the second image element comprising the element type name of the second image element and the attribute value of the image attribute associated with the second image element; and
b) a relative location in the image of the fist image element with respect to the second image element.

2. The method of claim 1 wherein the access control question further includes a description of a transformation of the image.

3. The method of claim 1 wherein the determination that the access control response corresponds to the attribute value of the image attribute associated with the first image element is made based on an equivalence of the access control response and the attribute value of the image attribute associated with the first image element.

4. The method of claim 3 wherein the equivalence is determined by an equivalence dictionary.

5. An access control system for a computer system comprising:
means for generating an image having first and second image elements, each of the image elements having associated an element type name and an image attribute, the image attribute including an attribute name and an attribute value;
means for generating an access control question including an identifier of the first image element and the attribute name of the image attribute associated with the first image element;
means for receiving an access control response;
means for, in response to a determination that the access control response corresponds to the attribute value of the image attribute associated with the first image element, providing access to a resource in the computer system, wherein the identifier of the first image element comprises:
a) an identifier of the second image element comprising the element type name of the second image element and the attribute value of the image attribute associated with the second image element; and
b) a relative location in the image of the fist image element with respect to the second image element.

6. The system of claim 5 wherein the access control question further includes a description of a transformation of the image.

7. The system of claim 5 wherein the determination that the access control response corresponds to the attribute value of the image attribute associated with the first image element is made based on an equivalence of the access control response and the attribute value of the image attribute associated with the first image element.

8. The system of claim 7 wherein the equivalence is determined by an equivalence dictionary.

9. The system of any of claims 5 to 8 further comprising the means for presenting the image and the access control question to a user.

10. An apparatus comprising:
a central processing unit;
a memory subsystem;
an input/output subsystem;
and a bus subsystem interconnecting the central processing unit, the memory subsystem, the input/output subsystem;
and the access control system as claimed in any of claims 5 to 8.

11. A computer program element comprising computer program code to, when loaded into a computer system and executed thereon, cause the computer to perform the steps of a method as claimed in any of claims 1 to 4.

## Patentansprüche

1. Verfahren zur Zugangskontrolle in einem Computersystem, wobei das Verfahren die folgenden Schritte umfasst:
Erzeugen eines Bildes mit ersten und zweiten Bildelementen, wobei jedem der Bildelemente ein Elementtypname und ein Bildattribut zugeordnet werden, wobei das Bildattribut einen Attributnamen und einen Attributwert beinhaltet;
Erzeugen einer Zugangskontrollfrage, die einen Kennzeichner des ersten Bildelements und den Attributnamen des dem ersten Bildelement zugeordneten Bildattributes beinhaltet;
Empfangen einer Zugangskontrollantwort;
auf eine Feststellung hin, dass die Zugangskontrollantwort dem Attributwert des dem ersten Bildelement zugeordneten Bildattributes entspricht, Bereitstellen des Zugangs zu einer Ressource im Computersystem, wobei der Kennzeichner des ersten Bildelements Folgendes umfasst:
a) einen Kennzeichner des zweiten Bildelements, der den Elementtypnamen des zweiten Bildelements und den Attributwert des dem zweiten Bildelement zugeordneten Bildattributes umfasst; und
b) eine relative Position des ersten Bildelements im Bild in Bezug auf das zweite Bildelement.

2. Verfahren nach Anspruch 1, wobei die Zugangskontrollfrage außerdem eine Beschreibung einer Transformation des Bildes beinhaltet.

3. Verfahren nach Anspruch 1, wobei die Feststellung, dass die Zugangskontrollantwort dem Attributwert des dem ersten Bildelement zugeordneten Bildattributes entspricht, auf der Grundlage einer Äquivalenz der Zugangskontrollantwort und des Attributwertes des dem ersten Bildelement zugeordneten Bildattributes erfolgt.

4. Verfahren nach Anspruch 3, wobei die Äquivalenz mittels eines Äquivalenzverzeichnisses (equivalence dictionary) festgestellt wird.

5. Zugangskontrollsystem für ein Computersystem, das Folgendes umfasst:
ein Mittel zum Erzeugen eines Bildes mit ersten und zweiten Bildelementen, wobei jedem der Bildelemente ein Elementtypname und ein Bildattribut zugeordnet werden, wobei das Bildattribut einen Attributnamen und einen Attributwert beinhaltet;
ein Mittel zum Erzeugen einer Zugangskontrollfrage, die einen Kennzeichner des ersten Bildelements und den Attributnamen des dem ersten Bildelement zugeordneten Bildattributes beinhaltet;
ein Mittel zum Empfangen einer Zugangskontrollantwort;
ein Mittel, um auf eine Feststellung hin, dass die Zugangskontrollantwort dem Attributwert des dem ersten Bildelement zugeordneten Bildattributes entspricht, den Zugang zu einer Ressource im Computersystem bereitzustellen, wobei der Kennzeichner des ersten Bildelements Folgendes umfasst:
a) einen Kennzeichner des zweiten Bildelements, der den Elementtypnamen des zweiten Bildelements und den Attributwert des dem zweiten Bildelement zugeordneten Bildattributes umfasst; und
b) eine relative Position im Bild des ersten Bildelements in Bezug auf das zweite Bildelement.

6. System nach Anspruch 5, wobei die Zugangskontrollfrage außerdem eine Beschreibung einer Transformation des Bildes beinhaltet.

7. System nach Anspruch 5, wobei die Feststellung, dass die Zugangskontrollantwort dem Attributwert des dem ersten Bildelement zugeordneten Bildattributes entspricht, auf der Grundlage einer Äquivalenz der Zugangskontrollantwort und des Attributwertes des dem ersten Bildelement zugeordneten Bildattributes erfolgt.

8. System nach Anspruch 7, wobei die Äquivalenz mittels eines Äquivalenzverzeichnisses festgestellt wird.

9. System nach irgendeinem der Ansprüche 5 bis 8, das außerdem das Mittel zum Darstellen des Bildes und der Zugangskontrollfrage für einen Benutzer umfasst.

10. Vorrichtung, die Folgendes umfasst:
eine Zentraleinheit;
ein Speicherteilsystem;
ein Ein-/Ausgabeteilsystem; und
ein Busteilsystem, das die Zentraleinheit, das Speicherteilsystem und das Ein-/Ausgabeteilsystem miteinander verbindet; und
das Zugangskontrollsystem nach irgendeinem der Ansprüche 5 bis 8.

11. Computerprogrammelement, das einen Computerprogrammcode umfasst, welcher, wenn er in ein Computersystem geladen wurde und in diesem ausgeführt wird, den Computer veranlasst, die Schritte eines Verfahrens nach irgendeinem der Ansprüche 1 bis 4 auszuführen.

## Revendications

1. Procédé de commande d'accès dans un système informatique, comprenant les étapes consistant à :
générer une image ayant des premier et deuxième éléments d'image, à chacun des éléments d'image étant associé un nom de type d'élément et un attribut d'image, l'attribut d'image incluant un nom d'attribut et une valeur d'attribut ;
générer une question pour obtenir la commande d'accès, incluant un identificateur du premier élément d'image et le nom d'attribut de l'attribut d'image associé au premier élément d'image ;
recevoir une réponse pour obtenir la commande d'accès ;
en réponse à la détermination du fait que la réponse pour obtenir la commande d'accès correspond à la valeur d'attribut de l'attribut d'image associé au premier élément d'image, fournir un accès à une ressource dans le système informatique, dans lequel l'identificateur du premier élément d'image comprend :
a) un identificateur du deuxième élément d'image, comprenant le nom de type d'élément du deuxième élément d'image et la valeur d'attribut de l'attribut d'image associé au deuxième élément d'image ; et
b) un emplacement relatif, dans l'image, du premier élément d'image par rapport au deuxième élément d'image.

2. Procédé selon la revendication 1, dans lequel la question pour obtenir la commande d'accès inclut en outre une description d'une transformation de l'image.

3. Procédé selon la revendication 1, dans lequel la détermination du fait que la réponse pour obtenir la commande d'accès correspond à la valeur d'attribut de l'attribut d'image associé au premier élément d'image est effectuée d'après une équivalence de la réponse pour obtenir la commande d'accès et de la valeur d'attribut de l'attribut d'image associé au premier élément d'image.

4. Procédé selon la revendication 3, dans lequel l'équivalence est déterminée par un dictionnaire d'équivalences.

5. Système de commande d'accès pour un système informatique, comprenant :
des moyens pour générer une image ayant des premier et deuxième éléments d'image, à chacun des éléments d'image étant associé un nom de type d'élément et un attribut d'image, l'attribut d'image incluant un nom d'attribut et une valeur d'attribut ;
des moyens pour générer une question pour obtenir la commande d'accès, incluant un identificateur du premier élément d'image et le nom d'attribut de l'attribut d'image associé au premier élément d'image ;
des moyens pour recevoir une réponse pour obtenir la commande d'accès ;
des moyens pour, en réponse à une détermination du fait que la réponse pour obtenir la commande d'accès correspond à la valeur d'attribut de l'attribut d'image associé au premier élément d'image, fournir un accès à une ressource dans le système informatique, dans lequel l'identificateur du premier élément d'image comprend :
a) un identificateur du deuxième élément d'image, comprenant le nom de type d'élément du deuxième élément d'image et la valeur d'attribut de l'attribut d'image associé au deuxième élément d'image ; et
b) un emplacement relatif, dans l'image, du premier élément d'image par rapport au deuxième élément d'image.

6. Système selon la revendication 5, dans lequel la question pour obtenir la commande d'accès inclut en outre une description d'une transformation de l'image.

7. Système selon la revendication 5, dans lequel la détermination du fait que la réponse pour obtenir la commande d'accès correspond à la valeur d'attribut de l'attribut d'image associé au premier élément d'image est effectuée d'après une équivalence de la réponse pour obtenir la commande d'accès et de la valeur d'attribut de l'attribut d'image associé au premier élément d'image.

8. Système selon la revendication 7, dans lequel l'équivalence est déterminée par un dictionnaire d'équivalences.

9. Système selon l'une quelconque des revendications 5 à 8, comprenant en outre les moyens pour présenter l'image et la question pour obtenir la commande d'accès à un utilisateur.

10. Appareil, comprenant :
une unité centrale de traitement ;
un sous-système de mémoire ;
un sous-système d'entrée/sortie ;
et un sous-système de bus, interconnectant l'unité centrale de traitement, le sous-système de mémoire, le sous-système d'entrée/sortie ;
et le système de commande d'accès selon l'une quelconque des revendications 5 à 8.

11. Elément de programme informatique, comprenant un code de programme informatique pour, une fois chargé dans un système informatique et exécuté sur lui, faire accomplir par l'ordinateur les étapes d'un procédé selon l'une quelconque des revendications 1 à 4.
